# EUROPEAN PATENT SPECIFICATION

(11) **EP 0 589 440 B1**
(45) Date of publication and mention of the grant of the patent: **27.05.1998**
(21) Application number: 93115294.6
(22) Date of filing: 22.09.1993
(51) Int. Cl.: C08G 77/04, C08G 77/44, C08G 77/50, C08G 77/52

(54) **Method of producing branched polyorganosiloxane**
Verfahren zur Herstellung von verzweigten Polysiloxanen
Procédé de préparation d'un polysiloxane ramifié

(30) Priority: 22.09.1992 JP 252772/92
(43) Date of publication of application: 30.03.1994
(73) Proprietor: DOW CORNING ASIA, Ltd., Tokyo 105 (JP)
(72) Inventor: Ogawa, Takuya c/o Dow Dorning Asia, Ltd., Minato-ku, Tokyo 105 (JP); Suzuki, Toshio c/o Dow Corning Asia, Ltd., Minato-ku, Tokyo 105 (JP)
(74) Representative: Sternagel, Hans-Günther, Dr.

(56) References cited:
- FR-A- 2 318 186
- US-A- 4 585 836

## Description

As reported in the J. Am. Chem. Soc. No. 112, page 7077 (1990), a branched polyorganosiloxane was prepared by use of a reaction between silanol groups and silicon-bonded chlorine atoms. However, hydrochloric acid is produced and tends to decompose the resulting branched polyorganosiloxane. To make matters worse, hydrochloric acid is a strong acid and difficult to work with or remove.

The use of branched polyorganosiloxanes to improve the fluid properties of silicone oils is desired by the industrial world. This invention is intended to eliminate by-product hydrochloric acid that easily decomposes branched polyorganosiloxanes during their manufacture.

This invention is the result of the inventors' investigations into possible solutions for the problems outlined above. The major characteristic of this invention is the method of producing a branched polyorganosiloxane that involves reacting a compound which has at least three silanol groups per molecule and which is soluble in an organic solvent with a linear polydiorganosiloxane having a polymerization degree of at least three and having only one chain end terminated with a group containing a nitrogen atom which is bonded to a silicon atom.

The branched polyorganosiloxane produced by the method of this invention is easily dispersed in silicone oil. When this branched polyorganosiloxane is mixed with the oil, the effects of good dispersion of branched polyorganosiloxane in silicone oil is achieved only when the branched polyorganosiloxane is soluble in an organic solvent. Thus, it is necessary that one of the raw materials, the compound which has at least three silanol groups per molecule, is soluble in organic solvents. When this condition is satisfied, the branched polyorganosiloxane produced in this invention can also be used as an additive in silicone rubbers.

One of the starting compounds employed in this invention is a compound which has at least three silanol (SiOH) groups per molecule, and there are no limitations on the structure of the compound as long as it contains three or more silanol groups available for reactions. Silicone resins generally have three or more silanol groups per molecule and are commercially available. A silicone resin is a compound having at least one unit chosen from triorganosiloxane (R¹₃SiO_{1/2} unit), diorganosiloxane (R²₂SiO unit), monoorganosiloxane (R³SiO_{3/2} unit), and silicate (SiO_{4/2} unit) units. An ordinary silicone resin contains uncondensed silanol groups in its molecules. (See Ito, Kunio, ed, Silicon Handbook, (Nikkan Kogyo Shinbunsha, August, 1990).

For the silicone resins desired for this invention, the radical represented by R¹, R² and R³ in the formulas above is a hydrogen atom, alkyl group, aryl group, alkenyl group, or halogenated alkyl group. Among the groups that fit this description, the easiest to acquire industrially are hydrogen atoms, methyl groups, ethyl groups, propyl groups, phenyl groups, vinyl groups, allyl groups, hexenyl groups, chloromethyl groups, chloropropyl groups, and trifluoropropyl groups.

Examples of compounds other than silicone resins that have three or more silanol groups per molecule include organosilane triol, poly(hydroxydiorganosilyl)benzene, poly(hydroxydiorganosilyl)alkane, and poly(hydroxydiorganosilyl)alkene.

Another ingredient of our branched polyorganosiloxane, and one that is also characteristic of the method of this invention, is a linear polydiorganosiloxane having a polymerization degree of at least three and having only one chain end terminated with a group containing a nitrogen atom which is bonded to a silicon atom. Examples of the group containing a nitrogen atom which is bonded to silicon include substituted and nonsubstituted amino groups such as alkylamino groups, dialkylamino groups, alkenylamino groups, dialkenylamino groups, and anilino groups; substituted and nonsubsituted amido groups, e.g. N-alkylacetamido groups, propionamido groups, and N-alkyl propionamido groups; substituted and nonsubstituted imido groups, e.g. phthalimido groups, succinimido groups, isocyano groups, thioisocyano groups, piperidino groups, morpholino groups, and N-imidazolinyl groups.

For efficient production of branched polyorganosiloxane, it is desirable that the reactivity of the groups containing nitrogen atoms with silanol groups is very high. However, hydrolysis ordinarily occurs easily with such highly reactive groups, and handling in the atmosphere can also present problems. Thus desirable groups with appropriate reactivities are dimethylamino groups, diethylamino groups, di(iso)propylamino groups, and (N-methyl)acetamido groups. Also, considering the ease of removing compounds that arise from a reaction with a silanol group, it is better if the molecular weight of these groups is relatively low.

It is necessary for the groups containing nitrogen atoms which bond to silicon atoms to be bonded to only one chain end of the linear polydiorganosiloxane. When the groups are bonded at two ends or at a side chain, there is a strong likelihood that gelling will occur when the linear polydiorganosiloxane is reacted with a compound containing at least three silanol units per molecule.

The polymerization degree of these linear polydiorganosiloxanes is three or more, because otherwise the effect of branching would be diminished. There is no upper limit on the degree of polymerization, but 1,000 is preferred from the point of view of reaction properties and operations. The most preferred range lies between 3 and 500. The examples of organic groups shown above for R¹, R² and R³ are examples of the organic groups bonded to the silicon atoms of the linear polydiorganosiloxane. From the economical point of view, the most preferred organic groups are methyl groups. Examples of the group that terminates the chain end of the linear polydiorganosiloxane that is opposite the chain end terminated with a group containing a nitrogen atom include triorganosilyl groups. Examples of the organic groups of the triorganosilyl groups include the same examples of organic groups shown above for R¹, R² and R³.

There are no special limitations on the production methods for the linear polydiorganosiloxane having a polymerization degree of at least three and having only one chain end terminated with a group containing a nitrogen atom which is bonded to a silicon atom. For instance, polydiorganosiloxanes that have a chlorine atom bonded to the silicon atom at the one unterminated end of the molecule can be reacted with amine or amide compounds in the presence of a hydrogen chloride scavenger. One method of producing the polydiorganosiloxanes that have a chlorine atom bonded to the silicon atom at the one unterminated end of the molecule is described in "Preparation of Poly(dimethylsiloxane) Macromonomers by the 'Initiator Method'", by T. Suzuki, Polymer, Volume 30, (1989), page 333-337.

There are no special limitations on conditions for the method of producing the branched polyorganosiloxane of this invention. The reaction between the compound which has at least three silanol groups per molecule and which is soluble in an organic solvent and the linear polydiorganosiloxane, having a polymerization degree of at least three and having only one chain end terminated with a group containing a nitrogen atom which is bonded to a silicon atom, may be done at room temperature, in a cool environment, or in a heated environment. Pressure conditions for the reaction may be normal, low, or high. The reaction temperature ordinarily can be carried out in the range of -80°C to 200°C. The preferred range is -25°C to 150°C.

The branched polyorganosiloxane of this invention can be prepared out in the appropriate solvent or without a solvent. There are no particular limitations when the solvent used is one that does not adversely affect the reaction and one in which the raw materials and polymers are soluble. Examples of acceptable solvents include aliphatic hydrocarbons, e.g. pentane, hexane, heptane, octane; aromatic hydrocarbons, e.g. benzene, toluene, and xylene; diethyl ether, dibutyl ether, diphenyl ether, dioxane, tetrahydrofuran, and other ether solvents; ethyl acetate, butyl acetate, and other ester solvents; acetone, methylethyl ketone, methylbutyl ketone, and other ketone solvents; carbon tetrachloride, chloroform, trichloroethane, trichloroethylene, tetrachloroethylene, and other halogenated solvents; dimethyl formamide; dimethylsulfoxide; and phosphorus hexamethyltriamide.

Since the reaction that produces the branched polyorganosiloxane of this invention is a condensation reaction between the silanol groups of the compound having at least three silanol groups per molecule and the group containing a nitrogen atom which is bonded to a silicon atom at only one chain end of the linear polydiorganosiloxane, by-products of the reaction include amines, amides, imides, and related compounds. These nitrogen-containing reaction by-products differ from the hydrochloric acid by-product of the prior art. Under normal conditions the polyorganosiloxane chain is not cleaved on contact with these nitrogen-containing reaction by-products, thus avoiding damage to the branched polyorganosiloxanes due to by-products. The circumstances are particularly favorable if raw materials that produce amides or imides are chosen. Amides and imides are neutral, which makes the probability of damaging side reactions extremely low.

The method of this invention provides a way of producing a branched polyorganosiloxane that allows the branched polyorganosiloxane to be dissolved in an organic solvent without being damaged by by-products of the reaction. The branched polyorganosiloxane produced through the method of this invention can be used as a constituent of silicone rubber or as an additive to improve the fluid characteristics of silicone oil.

In the examples below the molecular weights were determined by gel permeation chromatography (GPC), using standard polydimethylsiloxane samples as references. ²⁹SiNMR denotes the silicon 29 nuclear magnetic resonance spectroscopy (with tetramethylsilane as the standard). The abbreviation Me stands for a methyl group, and Et for an ethyl group.

Example 1. One hundred mL of tetrahydrofuran, and 4.0g of a silicone resin made of a unit of Me₂HSiO_{1/2}, a unit of Me₂(HO)SiO_{1/2}, and a unit of SiO_{4/2} (the molar ratio was 2:8:10, the weight average molecular weight was 1800) were placed in a flask and agitated. Then, 58g of polydimethylsiloxane which had a diethylamino group at the one chain end and a vinyl group at the other, described by formula Et₂N-(Me₂SiO)ₚ-SiMe₂C=CH₂, were added. This was agitated for two hours in a nitrogen atmosphere at room temperature. Low-pressure distillation was used to eliminate the solvent and by-product diethylamine, yielding a transparent, sticky fluid.

The weight average molecular weight of the product was 30100. The ²⁹SiNMR analysis established the peaks of a dimethylvinylsilyl group (approximately -4.0 ppm), dimethylsiloxane unit (approximately -21.8 ppm), Me₂HSiO_{1/2} unit (approximately -7.0 ppm), and SiO_{4/2} unit (approximately -110 ppm), but the peaks for silanol (approximately -12.2 ppm) and diethylaminosilyl (approximately -4.2 ppm) were not detected. The result showed that the reaction of the diethylamino groups on the one chain end of the polydimethylsiloxanes with the silanol groups in the silicone resin was complete and a branched (star) polyorganosiloxane was formed having the silicone resin as the core.

Example 2. 30 mL of tetrahydrofuran and 14 grams of a silicone resin made of a unit of Me₃SiO_{1/2}, and a unit of SiO_{4/2} (the molar ratio of the respective units was 7:10, the weight average molecular weight was 2500), and the percentage by weight of the silanol, which had not been subjected to condensation and which was bonded to the SiO_{4/2}, was 2.4%) were placed in a flask and agitated. Then, 3.7 grams of a siloxane that had an N-methylacetamido group at one end as indicated by the formula MeCON(Me)-(Me₂SiO)₃-SiMe₂CH=CH₂ was added. The mixture was agitated for two hours in a nitrogen atmosphere at room temperature. The product was precipitated in methanol, washed with methanol, and finally the solvent was removed by vacuum distillation. A colorless solid was obtained as a result.

The weight average molecular weight of the product was 4200. The ²⁹SiNMR analysis established the peaks of the dimethylvinylsilyl group (approximately - 4.2 ppm), dimethylsiloxane unit (approximately -21.0 ppm), and SiO_{4/2} unit (approximately - 110 ppm), but the peak for the N-methylacetamidosilyl group
(approximately -7.2 ppm) was not detected. This result showed that the reaction of the N-methylacetamidosilyl groups on one end of the polydimethylsiloxane with the silanol groups in the silicone resin was complete and a branched (star) polyorganosiloxane was formed containing the silicone resin as the core.

## Claims

1. A method of making a branched polyorganosiloxane comprising:
reacting a compound which has at least three silanol groups per molecule and which is soluble in an organic solvent with a linear polydiorganosiloxane having a polymerization degree of at least three and having only one chain end terminated with a group containing a nitrogen atom which is bonded to a silicon atom.

2. A method according to claim 1, wherein the compound with at least three silanol groups per molecule is a silicone resin having at least one unit selected from R¹₃SiO_{1/2}, R²₂SiO, R³SiO_{3/2} and SiO_{4/2}, where each R¹, R² and R³ is independently selected from hydrogen atom, alkyl, aryl, alkenyl, and halogenated alkyl.

3. A method according to claim 2, wherein each R¹, R², and R³ is independently selected from hydrogen atom, methyl, ethyl, propyl, phenyl, vinyl, allyl, hexenyl, chloromethyl, chloropropyl and trifluoropropyl.

4. A method according to claim 2, wherein the compound with at least three silanol groups per molecule is selected from organosilane triol, poly(hydroxydiorganosilyl)benzene, poly(hydroxydiorganosilyl)alkane, and poly(hydroxydiorganosilyl)alkene.

5. A method according to claim 1, wherein the linear polydiorganosiloxane has one chain end terminated with a group containing a nitrogen atom which group is selected from alkylamino, dialkylamino, alkenylamino, dialkenylamino, anilino, N-alkylacetamido, propionamido, N-alkylpropionamido, phthalimido, succinimido, isocyano, thioisocyano, piperidino, morpholino, and N-imidazolinyl.

6. A method according to claim 1, wherein the degree of polymerization of the linear polydiorganosiloxane is in a range of three to 1,000; organic groups bonded to silicon atoms of the linear polydiorganosiloxane are independently selected from alkyl, aryl, alkenyl, and halogenated alkyl; and the chain end of the linear polydiorganosiloxane opposite the end terminated with a group containing a nitrogen atom is terminated with a triorganosilyl group.

7. A method according to claim 6, wherein the degree of polymerization of the linear polydiorganosiloxane is in a range of three to 500; organic groups bonded to silicon atoms of the linear polydiorganosiloxane are independently selected from methyl, ethyl, propyl, phenyl, vinyl, allyl, hexenyl, chloromethyl, chloropropyl and trifluoropropyl; and the triorganosilyl group is selected from dimethylvinylsilyl and trimethylsilyl.

8. A method according to claim 7, wherein the organic groups of the linear polydiorganosiloxane are independently selected from methyl and 3,3,3-trifluoropropyl.

9. A method according to claim 1, wherein the compound which has at least three silanol groups per molecule and which is soluble in an organic solvent is a silicone resin having at least one unit selected from a group consisting of R¹₃SiO_{1/2}, R²₂SiO, R³SiO_{3/2} and SiO_{4/2}, where R¹, R² and R³ are independently selected alkyl, aryl, alkenyl, and halogenated alkyl; the degree of polymerization of the linear polydiorganosiloxane is in a range of three to 1,000; organic groups bonded to silicon atoms of the linear polydiorganosiloxane are independently selected from alkyl, aryl, alkenyl, and halogenated alkyl; the chain end of the linear polydiorganosiloxane opposite the end terminated with a group containing a nitrogen atom is terminated with a triorganosilyl group; and the group containing a nitrogen
atom is selected from alkylamino, dialkyl-amino, alkenylamino, dialkenylamino, anilino, N-alkylacetamido, propionamido, N-alkylpropionamido, phthalimido, succinimido, isocyano, thioisocyano, piperidino, morpholino, and N-imidazolinyl.

## Patentansprüche

1. Verfahren zur Herstellung eines verzweigten Polyorganosiloxans, umfassend:
Umsetzen einer Verbindung, die mindestens drei Silanolgruppen pro Molekül enthält und die in einem organischen Lösungsmittel löslich ist, mit einem linearen Polydiorganosiloxan, das einen Polymerisationsgrad von mindestens drei aufweist und in dem nur ein Kettenende mit einer Gruppe versehen ist, die ein Stickstoffatom enthält, das an ein Siliciumatom gebunden ist.

2. Verfahren nach Anspruch 1, worin die Verbindung mit mindestens drei Silanolgruppen pro Molekül ein Siliconharz ist, das mindestens eine Einheit, ausgewählt aus R¹ ₃SiO_{1/2}, R² ₂SiO, R³SiO_{3/2} und SiO_{4/2}, aufweist, worin jedes R¹, R² und R³ unabhängig voneinander ausgewählt ist aus einem Wasserstoffatom, Alkyl, Aryl, Alkenyl und halogeniertem Alkyl.

3. Verfahren nach Anspruch 2, worin jedes R¹, R² und R³ unabhängig voneinander ausgewählt ist aus einem Wasserstoffatom, Methyl, Ethyl, Propyl, Phenyl, Vinyl, Allyl, Hexenyl, Chlormethyl, Chlorpropyl und Trifluorpropyl.

4. Verfahren nach Anspruch 2, worin die Verbindung mit mindestens drei Silanolgruppen pro Molekül ausgewählt ist aus Organosilantriol, Poly(hydroxydiorganosilyl)benzol, Poly(hydroxydiorganosilyl)alkan und Poly(hydroxydiorganosilyl)alken.

5. Verfahren nach Anspruch 1, worin das lineare Polydiorganosiloxan an einem Kettenende mit einer Gruppe versehen ist, die ein Stickstoffatom enthält und ausgewählt ist aus Alkylamino, Dialkylamino, Alkenylamino, Dialkenylamino, Anilino, N-Alkylacetamido, Propionamido, N-Alkylpropionamido, Phthalimido, Succinimido, Isocyano, Thioisocyano, Piperidino, Morpholino und N-Imidazolinyl.

6. Verfahren nach Anspruch 1, worin der Polymerisationsgrad des linearen Polydiorganosiloxans in einem Bereich von 3 bis 1.000 liegt, die an die Siliciumatome des linearen Polydiorganosiloxans gebundenen organischen Gruppen unabhängig voneinander ausgewählt sind aus Alkyl, Aryl, Alkenyl und halogeniertem Alkyl und das Kettenende des linearen Polydiorganosiloxans, welches dem Ende, das mit einer stickstoffhaltigen Gruppe versehen ist, gegenüber liegt, mit einer Triorganosilylgruppe versehen ist.

7. Verfahren nach Anspruch 6, worin der Polymerisationsgrad des linearen Polydiorganosiloxans in einem Bereich von 3 bis 500 liegt, die organischen Gruppen, die an die Siliciumatome des linearen Polydiorganosiloxans gebunden sind, unabhängig voneinander ausgewählt sind aus Methyl, Ethyl, Propyl, Phenyl, Vinyl, Allyl, Hexenyl, Chlormethyl, Chlorpropyl und Trifluorpropyl und die Triorganosilylgruppe aus Dimethylvinylsilyl und Trimethylsilyl ausgewählt ist.

8. Verfahren nach Anspruch 7, worin die organischen Gruppen des linearen Polydiorganosiloxans unabhängig voneinander aus Methyl und 3,3,3-Trifluorpropyl ausgewählt sind.

9. Verfahren nach Anspruch 1, worin die Verbindung mit mindestens drei Silanolgruppen pro Molekül, die in einem organischen Lösungsmittel löslich ist, ein Siliconharz ist, das mindestens eine Einheit, ausgewählt aus einer Gruppe, bestehend aus R¹ ₃SiO_{1/2}, R² ₂SiO, R³SiO_{3/2} und SiO_{4/2}, aufweist, worin R¹, R² und R³ unabhängig voneinander ausgewählt sind aus Alkyl, Aryl, Alkenyl und halogeniertem Alkyl, der Polymerisationsgrad des linearen Polydiorganosiloxans in einem Bereich von 3 bis 1.000 liegt, die organischen Gruppen, die an Siliciumatome des linearen Polydiorganosiloxans gebundenen sind, unabhängig voneinander ausgewählt sind aus Alkyl, Aryl, Alkenyl und halogeniertem Alkyl, das Kettenende des linearen Polydiorganosiloxans, welches dem Ende, das mit einer stickstoffhaltigen Gruppe versehen ist, gegenüber liegt, mit einer Triorganosilylgruppe versehen ist und die Gruppe, die ein Stickstoffatom enthält, ausgewählt ist aus Alkylamino, Dialkylamino, Alkenylamino, Dialkenylamino, Anilino, N-Alkylacetamido, Propionamido, N-Alkylpropionamido, Phthalimido, Succinimido, Isocyano, Thioisocyano, Piperidino, Morpholino und N-Imidazolinyl.

## Revendications

1. Procédé de préparation d'un polyorganosiloxane ramifié, comprenant :
la réaction d'un composé qui a au moins trois groupes silanol par molécule et qui est soluble dans un solvant organique, avec un polydiorganosiloxane linéaire ayant un degré de polymérisation d'au moins trois et ayant seulement une extrémité de la chaîne est terminée par un groupe contenant un atome d'azote qui est lié à un atome de silicium.

2. Procédé selon la revendication 1, dans lequel le composé ayant au moins trois groupes silanol par molécule est une résine de silicone ayant au moins une unité choisie parmi R¹ ₃SiO_{1/2}, R² ₂SiO, R³SiO_{3/2} et SiO_{4/2}, où chaque R¹, R² et R³ est indépendamment choisi parmi l'atome d'hydrogène, un groupe alkyle, aryle, alcényle, et alkyle halogéné.

3. Procédé selon la revendication 2, dans lequel chaque R¹, R² et R³ est indépendamment choisi parmi l'atome d'hydrogène, un groupe méthyle, éthyle, propyle, phényle, vinyle, allyle, hexényle, chlorométhyle, chloropropyle et trifluoropropyle.

4. Procédé selon la revendication 2, dans lequel le composé ayant au moins trois groupes silanol par molécule est choisi parmi un organosilane triol, un poly(hydroxydiorganosilyl)benzène, un poly(hydroxydiorganosilyl)alcane et un poly(hydroxydiorganosilyl)alcène.

5. Procédé selon la revendication 1, dans lequel le polydiorganosiloxane linéaire a une extrémité de chaîne terminée par un groupe contenant un atome d'azote, ce groupe étant choisi parmi un groupe alkylamino, dialkylamino, alcénylamino, dialcénylamino, anilino, N-alkylacétamido, propionamido, N-alkylpropionamido, phtalimido, succinimido, isocyano, thioisocyano, pipéridino, morpholino et N-imidazolinyle.

6. Procédé selon la revendication 1, dans lequel le degré de polymérisation du polydiorganosiloxane linéaire est dans la gamme de trois à 1 000 ; les groupes organiques liés aux atomes de silicium du polydiorganosiloxane linéaire sont indépendamment choisis parmi les groupes alkyles, aryles, alcényles, et alkyles halogénés ; et l'extrémité de la chaîne du polydiorganosiloxane linéaire opposée à l'extrémité terminée par un groupe contenant un atome d'azote est terminée par un groupe triorganosilyle.

7. Procédé selon la revendication 6, dans lequel le degré de polymérisation du polydiorganosiloxane linéaire est dans la gamme de trois à 500 ; les groupes organiques liés aux atomes de silicium du polydiorganosiloxane linéaire sont indépendamment choisis parmi les groupes méthyle, éthyle, propyle, phényle, vinyle, allyle, hexényle, chlorométhyle, chloropropyle et trifluoropropyle ; et le groupe triorganosilyle est choisi parmi les groupes diméthylvinylsilyle et triméthylsilyle.

8. Procédé selon la revendication 7, dans lequel les groupes organiques du polydiorganosiloxane linéaire sont indépendamment choisis parmi les groupes méthyle et 3,3,3-trifluoropropyle.

9. Procédé selon la revendication 1, dans lequel le composé qui a au moins trois groupes silanol par molécule et qui est soluble dans un solvant organique est une résine de silicone ayant au moins une unité choisie dans le groupe constitué par parmi R¹ ₃SiO_{1/2}, R² ₂SiO, R³SiO_{3/2} et SiO_{4/2}, où R¹, R² et R³ sont indépendamment choisis parmi l'atome d'hydrogène, un groupe alkyle, aryle, alcényle, et alkyle halogéné ; le degré de polymérisation du polydiorganosiloxane linéaire est dans la gamme de trois à 1 000 ; les groupes organiques liés aux atomes de silicium du polydiorganosiloxane linéaire sont indépendamment choisis parmi les groupes alkyles, aryles, alcényles, et alkyles halogénés ; l'extrémité de la chaîne du polydiorganosiloxane linéaire opposée à l'extrémité terminée par un groupe contenant un atome d'azote est terminée par un groupe triorganosilyle ; et le groupe contenant un atome d'azote est choisi parmi les groupes alkylamino, dialkylamino, alcénylamino, dialcénylamino, anilino, N-alkylacétamido, propionamido, N-alkylpropionamido, phtalimido, succinimido, isocyano, thioisocyano, pipéridino, morpholino et N-imidazolinyle.
